Europäisches Patentamt

European Patent Office

Office européen des brevets

(19)

(11) EP 0 596 563 B1

(12) FASCICULE DE BREVET EUROPEEN

(45) Date de publication et mention
de la délivrance du brevet:
**05.01.2000 Bulletin 2000/01**

(51) Int Cl.⁷: **G06F 17/16**, G06F 17/18

(21) Numéro de dépôt: **93203012.5**

(22) Date de dépôt: **28.10.1993**

(54) **Dispositif de filtrage mettant en oeuvre un méthode des moindres carrés utilisant des matrices de rotation**

Filteranordnung zur Durchführung eines am geringsten quadratischen Verfahrens unter Verwendung von Rotationsmatrizen

Filter device to carry out a least squares method using rotation matrixes

(84) Etats contractants désignés:
**DE FR GB IT**

(30) Priorité: **04.11.1992 FR 9213243**

(43) Date de publication de la demande:
**11.05.1994 Bulletin 1994/19**

(73) Titulaire: **Koninklijke Philips Electronics N.V.**
**5621 BA Eindhoven (NL)**

(72) Inventeur: **Bellanger, Maurice**
**F-75008 Paris (FR)**

(74) Mandataire: **Chaffraix, Jean et al**
**Société Civile S.P.I.D.**
**156, Boulevard Haussmann**
**75008 Paris (FR)**

(56) Documents cités:
- **PROCEEDINGS OF THE 1988 INTERNATIONAL SYMPOSIUM ON CIRCUITS AND SYSTEMS; IEEE PRESS NEW YORK, US vol. 3 , 7 Juin 1988 , ESPOO FINLAND pages 2635 - 2639 M.G.BELLANGER 'COMPUTATIONAL COMPLEXITY AND ACCURACY ISSUES IN FAST LEAST SQUARES ALGORITHMS FOR ADAPTATIVE FILTERING'**
- **SIGNAL PROCESSING, ELSEVIER SCIENCE PUBLISHERS B.V. vol. 17, no. 4 , Août 1989 , AMSTERDAM, NL pages 291 - 304 XP000046219 M.G.BELLANGER 'THE FLS-QR ALGORITHM FOR ADAPTATIVE FILTERING'**

**Description**

La présente invention concerne un dispositif de filtrage mettant en oeuvre une méthode des moindres carrés, impliquant une première matrice de rotation $Q_a$ se déduisant d'une matrice $Q_N(n+1)$ :

$$\hat{Q}_N(n+1) = \begin{bmatrix} \cos\theta_N & \cdots & -\sin\theta_N & \cdots & 0 \\ \vdots & \vdots & \vdots & \vdots & \vdots \\ \sin\theta_N & \cdots & \cos\theta_N & \cdots & 0 \\ \vdots & \vdots & \vdots & \vdots & \vdots \\ 0 & \cdots & 0 & \cdots & 1 \end{bmatrix} \cdots \begin{bmatrix} \cos\theta_1 & \cdots & 0 & \cdots & -\sin\theta_1 \\ \vdots & \vdots & \vdots & \vdots & \vdots \\ 0 & \cdots & 1 & \cdots & 0 \\ \vdots & \vdots & \vdots & \vdots & \vdots \\ \sin\theta_1 & \cdots & 0 & \cdots & \cos\theta_1 \end{bmatrix}$$

cette matrice servant à définir une matrice $Q_N(n+1)$ :

$$Q_N(n+1) = \hat{Q}_N(n+1) \begin{bmatrix} 1 & 0 \\ 0 & Q_N(n) \end{bmatrix}$$

la matrice $Q_a$ étant dérivée de cette dernière matrice par suppression des rangées qui n'ont que des zéros et des uns, et une deuxième matrice $Q_\alpha(n+1)$ :

$$Q_\alpha(n+1) = \begin{bmatrix} \cos\alpha_N & \cdots & 0 & \cdots & -\sin\alpha_N \\ \cdots & & & & \\ 0 & \cdots & 1 & \cdots & 0 \\ \cdots & & & & \\ \sin\alpha_N & \cdots & 0 & \cdots & \cos\alpha_N \end{bmatrix} \cdots \begin{bmatrix} 1 & \cdots & 0 & & \cdots \\ . & & & & \\ . & & & & \\ . & & & & \\ 0 & \cdots & \cos\alpha_N & -\sin\alpha_N \\ 0 & \cdots & \sin\alpha_N & \cos\alpha_N \end{bmatrix}$$

dispositif comportant :

- un accès pour recevoir des échantillons x(n+1),
- des moyens pour traiter des échantillons de référence y(n+1),
- des moyens pour évaluer une erreur e(n+1) entre les échantillons x(n+1) et y(n+1) en coopération avec des moyens pour traiter l'échantillon de référence,
- des moyens pour évaluer par récurrence :

    a)

$$\begin{bmatrix} e_q(n+1) \\ X_q(n+1) \end{bmatrix} = Q_a(n) \begin{bmatrix} x(n+1) \\ W^{1/2}X_q(n) \end{bmatrix}$$

où $e_q(n+1)$ est la transformée de l'erreur $e(n+1)$ qui est un indicateur de son importance,
$X_q(n+1)$ est un vecteur à N composantes $x_{q;1}$ (i = 1, ..., N)
W est un facteur d'oubli tel que $0 \ll W < 1$

b) la matrice $Q_\alpha$ en calculant:

$$\sin\alpha_i = \frac{x_{q;i}}{\sqrt{x_{q;i}^2 + \sum_{k=1}^{i-1} x_{q;k}^2 + E_a(n+1)}}$$

c) $E_a(n+1) = WE_a(n) + e^2_q(n+1)$

d) $\alpha_2 = \gamma_N(n)e_q(n+1)/E_a^{1/2}(n+1)$

e) un vecteur "gain" $G_N(n+1)$ formé de N composantes $g_1, ..., g_N(n+1)$ :

$$\begin{bmatrix} \alpha_1 \\ G_N(n+1) \end{bmatrix} = Q_\alpha(n+1) \begin{bmatrix} G_N(n) \\ \alpha_2 \end{bmatrix}$$

f) la réactualisation de la matrice $Q_a(n)$ soit $Q_a(n+1)$ en calculant :

$$\begin{cases} \sin\theta_i &= g_{N-i}(n+1)/\gamma_i(n+1) \\ \gamma_{i+1} &= \gamma_i \cos\theta_i \end{cases}$$

Un tel dispositif peut trouver d'importantes applications dans le domaine du traitement du signal, notamment : pour des annuleurs d'écho utilisés dans les transmissions de données, pour l'élimination des trajets multiples en radiocommunications.

Un dispositif de ce genre est décrit dans l'article suivant paru dans la revue SIGNAL PROCESSING n° 22, 1991 (ELSEVIER) : "The FLS-QR Algorithm for Adaptive Filtering : The Case of Multichannel Signals" de M.G. BELLANGER et P.A. REGALIA.

Ce dispositif connu traite des données d'entrée en fonction d'un signal de référence et fournit directement un signal de différence entre un signal filtré et le signal de référence sans fournir le signal filtré. Ceci limite l'application de ce dispositif. Par exemple on ne peut pas l'utiliser pour des égaliseurs où le signal de référence est établi au moyen d'un circuit à seuils opérant sur le signal filtré.

La présente invention propose un dispositif du genre mentionné dans le préambule pour lequel le signal filtré est rendu accessible.

Pour cela, un tel dispositif est remarquable en ce qu'il comporte, en outre, des moyens pour évaluer des échantillons filtrés $\bar{y}(n+1)$ par récurrence en calculant :

$$
\begin{bmatrix} U_{N-1} \\ y'_{q;N}(n+1) \end{bmatrix} = \frac{1}{\cos\theta_N} \begin{bmatrix} 1 & \sin\theta_N \\ \sin\theta_N & 1 \end{bmatrix} \begin{bmatrix} 0 \\ W^{1/2}y_{q;N}(n) \end{bmatrix}
$$

$$
\begin{bmatrix} U_{i-1} \\ y'_{q;i}(n+1) \end{bmatrix} = \frac{1}{\cos\theta_i} \begin{bmatrix} 1 & \sin\theta_i \\ \sin\theta_i & 1 \end{bmatrix} \begin{bmatrix} U_i \\ W^{1/2}y_{q;i}(n) \end{bmatrix}
$$

$$
\begin{bmatrix} \tilde{y}(n+1) \\ y'_{q;1}(n+1) \end{bmatrix} = \frac{1}{\cos\theta_1} \begin{bmatrix} 1 & \sin\theta_1 \\ \sin\theta_1 & 1 \end{bmatrix} \begin{bmatrix} U_1 \\ W^{1/2}y_{q;1}(n) \end{bmatrix}
$$

et évaluer :

$$
Y_q(n+1) = [Y'_q(n+1) + e(n+1).G(n+1)].
$$

L'invention sera réalisée selon la revendication 1 ci-jointe.

La description suivante, accompagnée des dessins ci-annexés fera bien comprendre comment l'invention peut être réalisée.

La figure 1 montre sous forme de bloc un dispositif de filtrage de l'art antérieur.

La figure 2 montre aussi sous forme de bloc un dispositif de filtrage conforme à l'invention.

La figure 3 montre un mode de réalisation d'un dispositif de filtrage conforme à l'invention.

Les figures 4 et 5 représentent un organigramme de fonctionnement d'un premier mode de réalisation de l'invention.

La figure 6 est un organigramme de fonctionnement d'un deuxième mode de réalisation de l'invention.

La figure 7 est un organigramme de fonctionnement d'un troisième mode de réalisation de l'invention.

La figure 8 est un organigramme de fonctionnement d'un quatrième mode de réalisation de l'invention.

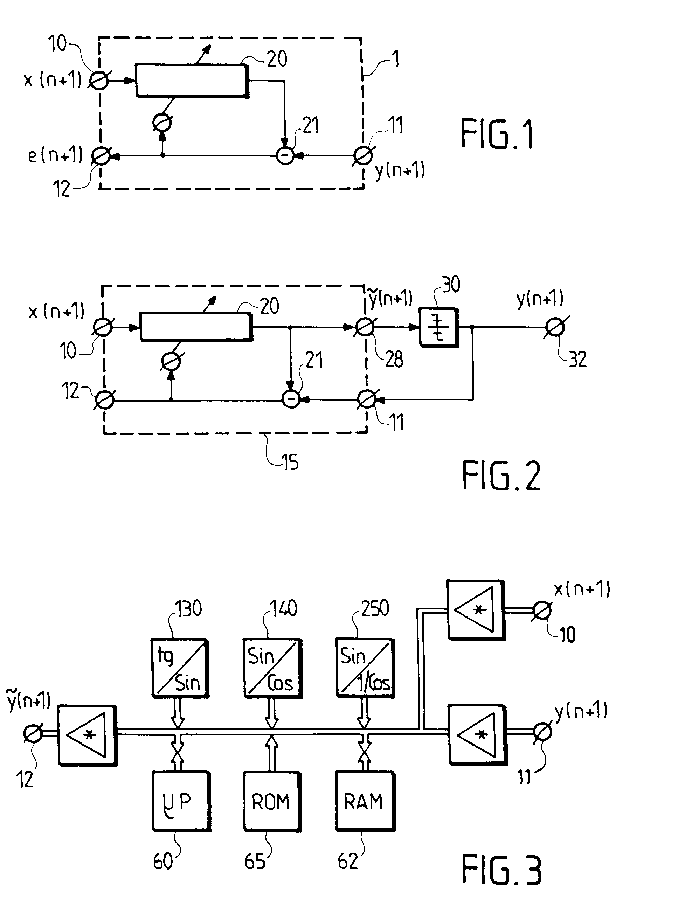

A la figure 1, on a représenté un bloc 1 qui effectue les opérations telles que décrites dans l'art antérieur. A un accès 10 on reçoit les échantillons à filtrer x(n+1), à un accès 11 des échantillons de référence y(n+1) et à un accès 12 une erreur e(n+1). Pour des raisons de clarté on a représenté simplement ce bloc avec une partie filtrage 20, un organe de différence 21. Mais, il faut insister sur le fait que, selon l'art antérieur, les signaux à la sortie de la partie filtrage 20 ne sont pas disponibles.

On rappelle dans ce qui suit les fonctions des dispositifs de l'art antérieur :

a) une première étape est définie par la matrice suivante :

$$
\begin{bmatrix} e_q(n+1) \\ X_q(n+1) \end{bmatrix} = Q_a(n) \begin{bmatrix} x(n+1) \\ W^{1/2}X_q(n) \end{bmatrix} \qquad (1)
$$

où

$e_q(n+1)$    est la transformée de l'erreur e(n+1) qui est un indicateur de son importance,

$X_q(n+1)$    est un vecteur à N composantes $x_{q;i}$ (i = 1, ..., N)

W est un facteur d'oubli tel que $0 << W < 1$

$Q_a$ est une matrice dérivée d'une matrice $Q_n(n+1)$ :

$$\hat{Q}_N(n+1) =$$

$$\begin{bmatrix} \cos\theta_N & -\sin\theta_N & 0 & \dots & 0 \\ \sin\theta_N & \cos\theta_N & 0 & \dots & 0 \\ 0 & 0 & 1 & \dots & 0 \\ \cdot & & & & \\ \cdot & & & & \\ \cdot & & & & \\ 0 & & \cdot & \cdot & 1 \end{bmatrix} \dots \begin{bmatrix} \cos\theta_1 & \dots & 0 & \dots & -\sin\theta_1 \\ \cdot & & & & \\ \cdot & & & & \\ \cdot & & & & \\ 0 & \dots & 1 & \dots & 0 \\ \cdot & & & & \\ \cdot & & & & \\ \cdot & & & & \\ \sin\theta_1 & \dots & 0 & \dots & \cos\theta_1 \end{bmatrix} \qquad (2)$$

$Q_a$ est obtenue à partir de cette matrice $\hat{Q}_N(n+1)$ en supprimant rangées et colonnes contenant des "0" et des "1".

b) une deuxième étape consiste à calculer :

$$E_a(n+1) = WE_a(n) + e_q^2(n+1)$$

où $E_a$ représente l'énergie du signal d'erreur $e_{aq}$

c) une troisième étape consiste à déterminer les éléments d'une matrice de rotation $Q_\alpha(n+1)$ :

$$Q_\alpha(n+1) =$$

$$\begin{bmatrix} \cos\alpha_N & \dots & 0 & \dots & -\sin\alpha_N \\ \dots & & & & \\ 0 & \dots & 1 & \dots & 0 \\ \dots & & & & \\ \sin\alpha_N & \dots & 0 & \dots & \cos\alpha_N \end{bmatrix} \dots \begin{bmatrix} 1 & \dots & 0 & \dots \\ \cdot & & & \\ \cdot & & & \\ \cdot & & & \\ 0 & \dots & \cos\alpha_N & -\sin\alpha_N \\ 0 & \dots & \sin\alpha_N & \cos\alpha_N \end{bmatrix} \qquad (3)$$

à partir de la relation :

$$\sin\alpha_i = \frac{x_{q;i}}{\sqrt{x_{q;i}^2 + \sum_{k=1}^{i-1} x_{q;k}^2 + E_a(n+1)}} \qquad (4)$$

d'où peut se déduire la valeur : $\cos\alpha_i$.

d) une quatrième étape consiste à calculer :

$$\alpha_2 = \gamma_N(n)e_q(n+1)/E_a^{1/2}(n+1) \qquad (5)$$

e) une cinquième étape consiste à déterminer un vecteur "gain" $G_N(n+1)$ formé de N composantes $g_1, \dots, g_N(n+1)$ :

$$\begin{bmatrix} \alpha_1 \\ G_N(n+1) \end{bmatrix} = Q_\alpha(n+1) \begin{bmatrix} G_N(n) \\ \alpha_2 \end{bmatrix} \qquad (6)$$

f) une sixième étape consiste à réactualiser la matrice $Q_a(n)$ soit $Q_a(n+1)$ en calculant :

$$\begin{cases} \sin\theta_i &=& g_{N-i}(n+1)/\gamma_i(n+1) \\ \gamma_{i+1} &=& \gamma_i \cos\theta_i \end{cases} \qquad (7)$$

Selon l'invention, on a prévu des moyens pour évaluer la quantité $\tilde{y}(n+1)$. Cette quantité est explicitée à la figure 2. Les éléments communs à ceux de la figure 1 portent les mêmes références.

Ce signal $\tilde{y}(n+1)$ apparaissant sur un accès 28 peut être considéré comme le résultat d'un filtrage effectué par un filtre transversal :

$$\tilde{y}(n+1) = \sum_{k=0}^{N-1} h_i(n+1)\, x(n+1-k) \qquad (8)$$

où $h_i(n+1)$ sont les coefficients de ce filtre considérés à l'instant "n+1".

Ce signal $\tilde{y}(n+1)$ peut être appliqué à un circuit de décision 30 qui fournit à un accès 32 une valeur $y(n+1)$ qui sert de référence pour le calcul de l'erreur $e(n+1)$ effectué par l'organe de différence 21.

Pour effectuer l'estimation $\tilde{y}(n+1)$ le dispositif comporte des moyens pour effectuer des étapes supplémentaires.

Une première étape supplémentaire est formée des itérations suivantes :

$$\begin{bmatrix} U_{N-1} \\ y'_{q;N}(n+1) \end{bmatrix} = \frac{1}{\cos\theta_N} \begin{bmatrix} 1 & \sin\theta_N \\ \sin\theta_N & 1 \end{bmatrix} \begin{bmatrix} 0 \\ W^{1/2}\, y_{q;N}(n) \end{bmatrix}$$

$$\vdots$$

$$\begin{bmatrix} U_{i-1} \\ y'_{q;i}(n+1) \end{bmatrix} = \frac{1}{\cos\theta_i} \begin{bmatrix} 1 & \sin\theta_i \\ \sin\theta_i & 1 \end{bmatrix} \begin{bmatrix} U_i \\ W^{1/2} y_{q;i}(n) \end{bmatrix} \qquad (9)$$

$$\vdots$$

$$\begin{bmatrix} \tilde{y}(n+1) \\ y'_{q;1}(n+1) \end{bmatrix} = \frac{1}{\cos\theta_1} \begin{bmatrix} 1 & \sin\theta_1 \\ \sin\theta_1 & 1 \end{bmatrix} \begin{bmatrix} U_1 \\ W^{1/2} y_{q;1}(n) \end{bmatrix}$$

et une deuxième étape supplémentaire :

$$[Y_q(n+1)] = (\,Y'_q(n+1) + e(n+1)G(n+1)] \qquad (10)$$

Ces étapes supplémentaires ont été établies en se basant sur les considérations suivantes :

On rappelle la relation suivante donnée par l'art antérieur (voir "Filter Section du Tableau I page 118 de l'article précité) :

$$\begin{bmatrix} e_q(n+1) \\ Y_q(n+1) \end{bmatrix} = Q_a(n+1) \begin{bmatrix} y(n+1) \\ W^{1/2}Y_q(n) \end{bmatrix} \qquad (11)$$

où $Y_q$ est un vecteur de composants $y_{q;1}, ..., y_{q;N}$.

Si on substitue dans cette relation $\tilde{y}(n+1)$ à $y(n+1)$, ceci entraîne que l'erreur $e(n+1)$ est forcément nulle et sa transformée $e_q(n+1) = 0$.

$$\begin{bmatrix} 0 \\ Y_q'(n+1) \end{bmatrix} = Q_a(n+1) \begin{bmatrix} \tilde{y}(n+1) \\ W^{1/2}Y_q(n) \end{bmatrix} \qquad (12)$$

où $Y'_q$ est un vecteur de composants $y'_{q;1}, ..., y'_{q;N}$.

Comme le vecteur à droite est différent de celui de la formule précédente, le vecteur $Y'_q(n+1)$ doit être substitué à $Y_q(n+1)$.

De la relation ci-dessus on peut extraire le système suivant en profitant de la structure de la matrice $Q_a(n+1)$,

$$\begin{bmatrix} 0 \\ y_{q;N}' \end{bmatrix} = \begin{bmatrix} \cos \theta_N & -\sin \theta_N \\ \sin \theta_N & \cos \theta_N \end{bmatrix} \begin{bmatrix} U_{N-1} \\ W^{1/2}y_{q;N}(n) \end{bmatrix} \qquad (13)$$

en faisant apparaître une composante auxiliaire $U_{N-1}$, ce qui peut se mettre sous la forme :

$$\begin{bmatrix} U_{N-1} \\ y_{q;N}'(n+1) \end{bmatrix} = \frac{1}{\cos \theta_N} \begin{bmatrix} 1 & \sin \theta_N \\ \sin \theta_N & 1 \end{bmatrix} \begin{bmatrix} 0 \\ W^{1/2}y_{q;N}(n) \end{bmatrix} \qquad (14)$$

D'une manière similaire, on peut écrire :

$$\begin{bmatrix} U_{i-1} \\ y_{q;i}'(n+1) \end{bmatrix} = \frac{1}{\cos \theta_i} \begin{bmatrix} 1 & \sin \theta_i \\ \sin \theta_i & 1 \end{bmatrix} \begin{bmatrix} U_i \\ W^{1/2}y_{q;i}(n) \end{bmatrix} \qquad (15)$$

et en remontant l'itération :

$$\begin{bmatrix} \tilde{y}(n+1) \\ y_{q;1}'(n+1) \end{bmatrix} = \frac{1}{\cos \theta_1} \begin{bmatrix} 1 & \sin \theta_1 \\ \sin \theta_1 & 1 \end{bmatrix} \begin{bmatrix} U_1 \\ W^{1/2}y_{q;1}(n) \end{bmatrix} \qquad (16)$$

on peut écrire la relation (11) :

$$\begin{bmatrix} e_q(n+1) \\ Y_q(n+1) \end{bmatrix} = Q_a(n+1) \begin{bmatrix} \tilde{y}(n+1) + e(n+1) \\ W^{1/2}Y_q(n) \end{bmatrix} \qquad (17)$$

et compte tenu de (12) :

$$\begin{bmatrix} e_q(n+1) \\ Y_q(n+1) \end{bmatrix} = \begin{bmatrix} 0 \\ Y_q'(n+1) \end{bmatrix} + Q_a(n+1) \begin{bmatrix} e(n+1) \\ 0 \end{bmatrix} \qquad (18)$$

Or on sait que (voir Tableau I de la référence précitée) :

$$\begin{bmatrix} \gamma_N(n+1) \\ G_N(n+1) \end{bmatrix} = Q_a(n+1) \begin{bmatrix} 1 \\ 0 \\ \vdots \end{bmatrix} \qquad (19)$$

on en déduit :

$$e_q(n+1) = \gamma_N(n+1)\, e(n+1) \qquad (20)$$

$$Y_q(n+1) = Y'_q(n+1) + G_N(n+1)\, e(n+1) \qquad (21)$$

Les moyens décrits peuvent être réalisés d'une manière avantageuse en utilisant le dispositif montré à la figure 3. Ce dispositif est formé à partir d'un processeur de signal genre TMS 320 par exemple, portant sur cette figure la référence 60 ; autour de ce processeur, on trouve un ensemble de mémoires RAM référencées 62 qui contiennent des données et une mémoire ROM 65 contenant notamment le programme de fonctionnement. Les accès pour x(n+1), y(n+1) et $\tilde{y}$(n+1) portent les mêmes références.

Il va de soi que l'organe de décision 40 peut être aussi réalisé par une sous-routine de fonctionnement. Il est prévu une table de valeurs sinusoïdales 130 qui fournit, par exemple, une valeur de sinus à partir d'une valeur de tangente. Il est évident que cette table contenant des valeurs dans une mémoire morte peut être comprise dans la mémoire morte 65.

Il est prévu aussi une deuxième table de valeurs sinusoïdales 140 qui fournit une valeur de cosinus en fonction d'une valeur de sinus. Les remarques faites ci-dessus pour la mémoire 130 s'appliquent.

Il est prévu enfin une troisième table de valeurs sinusoïdales 250 qui fournit une valeur de cosinus inverse en fonction d'une valeur de sinus.

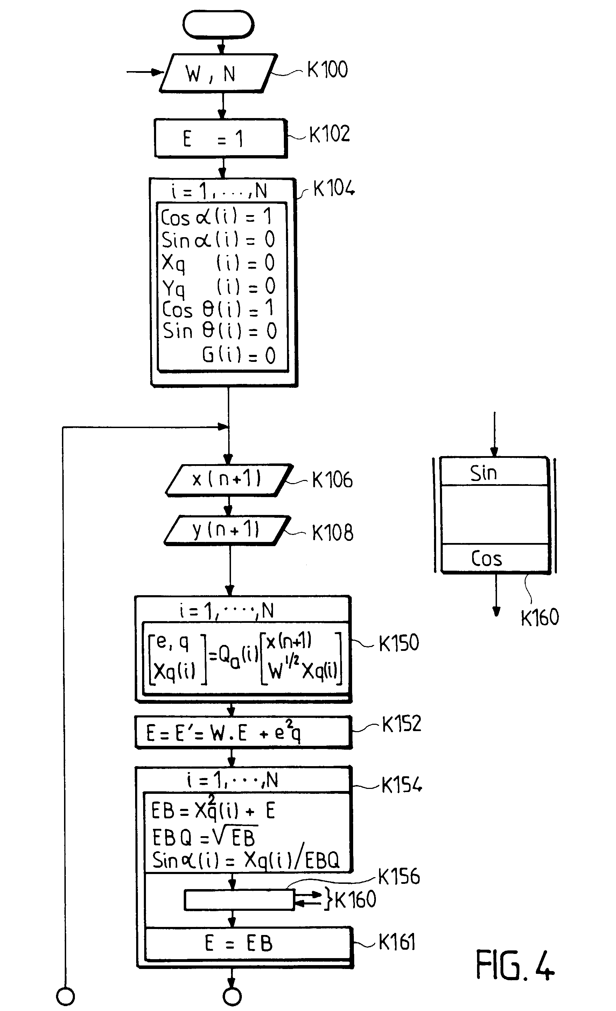

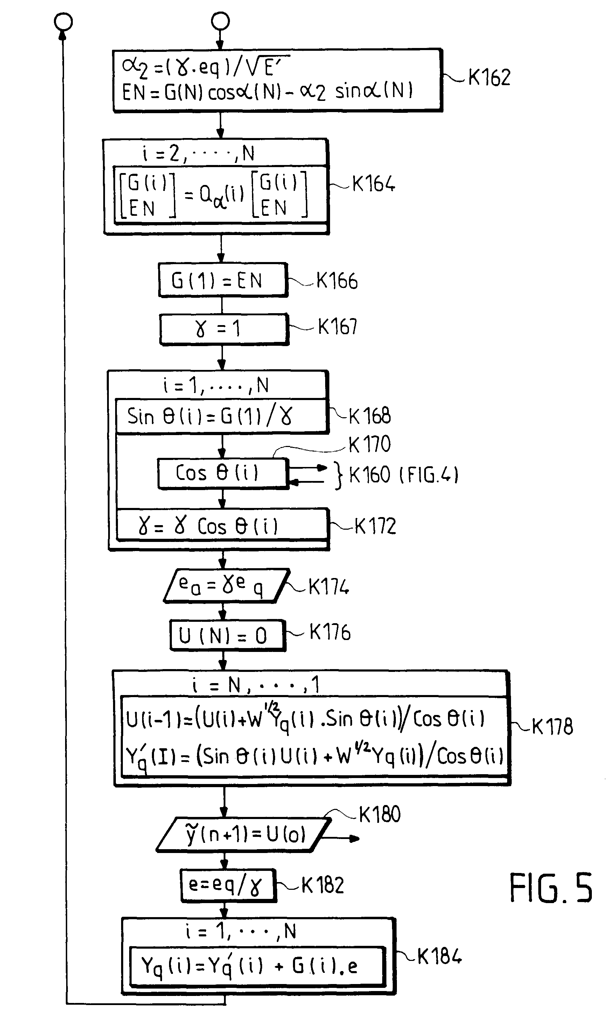

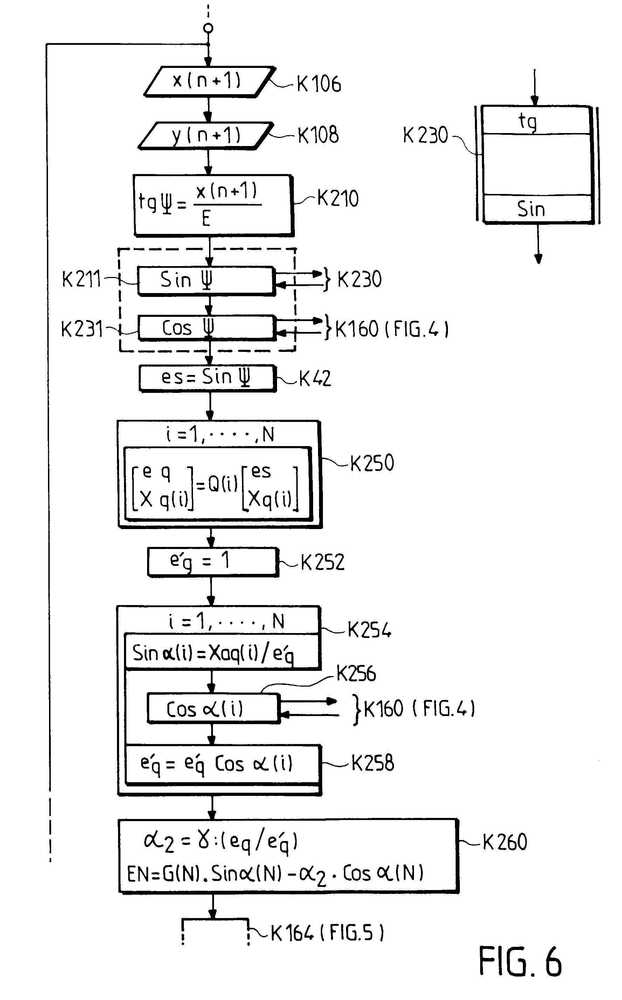

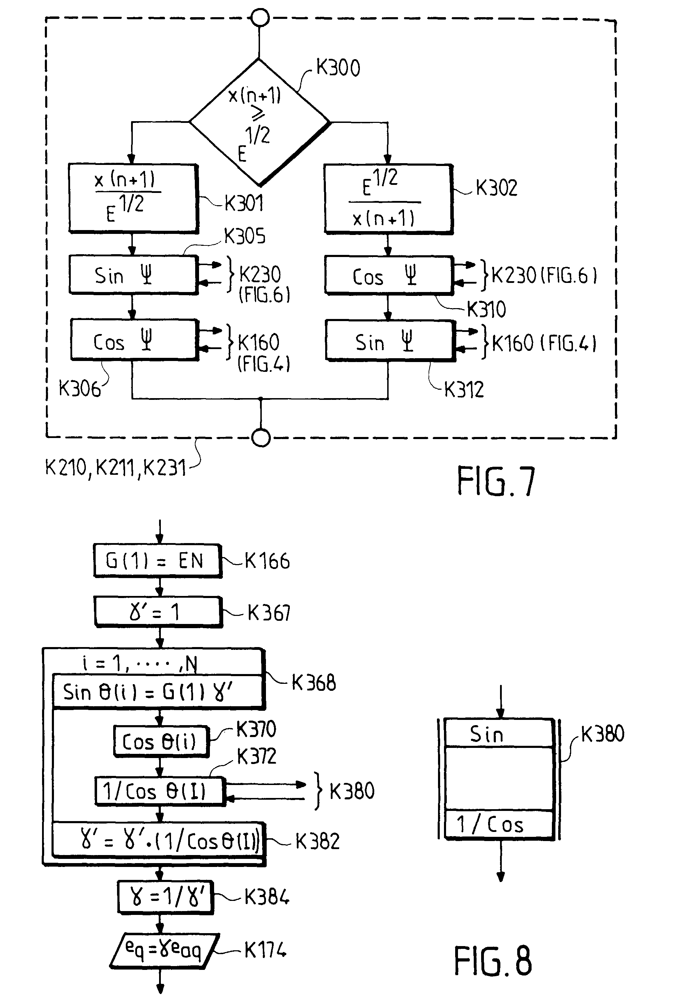

Le fonctionnement du dispositif est fixé par un programme emmagasiné dans la mémoire morte 65. Ce fonctionnement est explicité à l'aide des figures 4 et 5.

Cet organigramme débute par une case K100 où les valeurs de N (ordre de filtrage) et W (facteur de pondération) sont entrées. La valeur de E est initialisée à 1 à la case K102. La case K104 indique une initialisation de différentes valeurs indexées selon i qui varie de 1 à N ; le cosinus des angles $\theta_1$ et $\alpha_1$ est mis à 1 tandis que leur sinus est mis à 0 ; les valeurs $X_q(i)$ et $Y_q(i)$ composantes des vecteurs $X_q$ et $Y_q$ sont, elles aussi, mises à 0. Les cases K106 et K108 représentent respectivement les valeurs de x(n+1) et y(n+1) qui sont lues à partir des accès 10 et 11. La case K150 indique le calcul de $e_q$ et de $X_q(I)$ conformément à la formule (1). Cette formule peut être aussi explicitée de la manière suivante, en s'inspirant des normes du language FORTRAN.

```
es      = x(n+1)
DO I    = 1, N
e_q     = es
es      = e_q . cosθ(I) - W^(1/2) . X_q(I) . sinθ(I)
X_q(I)  = e_q . sinθ(I) + W^(1/2) . X_q(I) . cosθ(I)

CONTINUE
```

Avant d'entreprendre un autre traitement, on initialise les variables E et E' avec les valeurs indiquées case K152. Cet autre traitement montré à la case K154 consiste à déterminer le sinus des différents angles a(I) en évaluant les quantités données à la formule (4). Par appel, case K156, à la table 140 (le processus d'adressage de cette table est figuré par la case K160), on obtient la valeur du cosinus associé. La case K161 donne la valeur E qui va servir à la prochaine itération de la formule. Puis à la case K162, figure 5, on détermine la quantité donnée par la formule (5) ; à la case K164, on évalue les N valeurs des composantes de $G_N$(n+1) indiquées par la formule (6).

Cette formule peut être explicitée par :

```
DO I        = 2, N
G(N+2-I)    = G(N+1-I) . cos α(N+1-I) - EN.sin α(N+1-I)
EN1         = G(N+1-I) . sin α(N+1-I) - EN.cos α(N+1-I)
EN          = EN1
```

CONTINUE

La case K166 précise la valeur G(1), puis à la case K167 on initialise la valeur de $\gamma$. Les cases K168, K170 et K172 représentent la mise à jour de la matrice $Q_a(n+1)$. On remarquera la case K170 qui fournit la valeur du cosinus par appel avec la valeur du sinus, de la table indiquée à la case K160.

La valeur de $\gamma$ est ensuite utilisée pour fournir la valeur e(n+1), case K174.

A la case K176, on initialise une variable indicée U(N) = O de façon à évaluer les différentes relations (14), (15), (16) case K178.

A la case K180 la valeur $\tilde{y}$ (n+1) peut être fournie sur l'accès 32.

A la case K182 on évalue la valeur e, formule (21) et à la case K184 le vecteur $Y_q$ est mis à jour, formule (20).

A la figure 7, on montre une variante de réalisation selon laquelle une étape de normalisation a été prévue -voir figure 6.

On pourra aussi à ce sujet consulter la demande de brevet français n° 91 14 586 déposée le 26 novembre 1991 au nom de la demanderesse. Cette étape de normalisation se déroule à la case K210, qui vient après la case K108. Cette phase débute par le calcul du quotient de la valeur de l'échantillon sur la valeur de la racine carré de E, ce qui donne la valeur de tangente d'un angle $\psi$. En adressant la table 130, on obtient la valeur de sin $\psi$, ceci est indiqué à la case K211 et l'opération effectuée par la table est désignée par K230. Pour obtenir le cosinus, on adresse la table 140, ceci est indiqué à la case K231 et l'opération de la table 140, par la case K160 (cf. figure 4). Puis à la case K242, on fait appel à une variable auxiliaire "es" qui prend la valeur sin $\psi$. La case K250 indique le calcul de $e_q$ et de $X_{q(i)}$ explicité de la manière suivante, en s'inspirant des normes du language FORTRAN.

```
DO I     = 1, N
e_q      = es
es       = e_q . cos θ(i) - cos ψ . X_q(I) . sin θ(I)
X_q(I)   = e_q . sin θ(i) + cos ψ . X_q(I) . cos θ(I)
```

CONTINUE

Avant d'entreprendre un autre traitement, on initialise une variable $e'_q$ à 1, case K252. Cet autre traitement montré à la case K254 consiste à déterminer le sinus des différents angles $\alpha(I)$ en évaluant les quantités indiquées. Par appel, case K256, à la table 140, on obtient la valeur du cosinus associé. La case K258 donne la valeur $e'_q$, valeur $E_a^{1/2}(n+1)$ de la formule. Puis à la case K262, on détermine les quantités $\alpha 2$ et EN modifiées par l'étape de normalisation. Les étapes qui suivent sont celles indiquées aux figures 5 et 6 en commençant par la case K164.

Selon un autre mode de réalisation, on peut limiter la taille de la table 130. Cette variante remplace les cases K210, K211 et K231 de l'organigramme de la figure 6. La case K300 est un test de x(n+1) par rapport à $E^{1/2}$ de façon à effectuer une division, cases K301, K302 dont le résultat soit inférieur à "1". Si on effectue l'opération de la case K301 on a la valeur de tg $\psi$, et la valeur des sinus et cosinus (K305 et K306) la suite des opérations est identique à celles de la figure 6. Si on effectue l'opération de la case K302, on a la valeur 1/tg $\psi$; pour obtenir le cosinus (K310) de cet angle on accède à la table K160 et pour obtenir le sinus (K312), à la table K230.

La figure 8 montre comment la matrice $Q_a$ peut être mise à jour en évitant des divisions. Cette partie d'organigramme vient remplacer la partie d'organigramme de la figure 5, située entre les cases K166 et K174. La case K367 indique l'initialisation d'un paramètre $\gamma'$. Puis la case K368 indique la détermination des sinus de l'angle $\theta$, la case K370 est un appel à la table K160 pour mettre en mémoire les différents cosinus de cet angle, puis à la case K372 on fait appel à une autre table K380 (mémoire 250, figure 3) qui fournit l'inverse du cosinus en fonction du sinus. A la case K382 on détermine le coefficient $\gamma'$. A la fin de l'itération on rétablit la valeur de $\gamma$ en remarquant que ces valeurs sont inverses l'une de l'autre (case K384). On a ainsi effectué les substitutions suivantes :

$$\left. \begin{array}{l} \gamma = \gamma' \rightarrow \dfrac{1}{\gamma} \\[2mm] \cos \theta_i \rightarrow \dfrac{1}{\cos \theta_i} \end{array} \right\} \qquad (22)$$

Ainsi, par la présence de ces tables, un grand nombre de divisions ont été supprimées et aucune extraction de racine carrée n'est nécessaire.

**Revendications**

1.   Dispositif de filtrage mettant en oeuvre une méthode des moindres carrés, impliquant une première matrice de rotation $Q_a$ se déduisant d'une matrice $Q_N(n+1)$ :

$$\hat{Q}_N(n+1) = \begin{bmatrix} \cos\theta_N & \cdots & -\sin\theta_N & \cdots & 0 \\ \vdots & \vdots & \vdots & \vdots & \vdots \\ \sin\theta_N & \cdots & \cos\theta_N & \cdots & 0 \\ \vdots & \vdots & \vdots & \vdots & \vdots \\ 0 & \cdots & 0 & \cdots & 1 \end{bmatrix} \cdots \begin{bmatrix} \cos\theta_1 & \cdots & 0 & \cdots & -\sin\theta_1 \\ \vdots & \vdots & \vdots & \vdots & \vdots \\ 0 & \cdots & 1 & \cdots & 0 \\ \vdots & \vdots & \vdots & \vdots & \vdots \\ \sin\theta_1 & \cdots & 0 & \cdots & \cos\theta_1 \end{bmatrix}$$

cette matrice servant à définir une matrice $Q_N(n+1)$ :

$$Q_N(n+1) = \hat{Q}_N(n+1) \begin{bmatrix} 1 & 0 \\ 0 & Q_N(n) \end{bmatrix}$$

la matrice $Q_a$ étant dérivée de cette dernière matrice par suppression des rangées qui n'ont que des zéros et des uns,
et une deuxième matrice $Q_\alpha(n+1)$ :

$$Q_\alpha(n+1) = \begin{bmatrix} \cos\alpha_N & \cdots & 0 & \cdots & -\sin\alpha_N \\ \cdots & & & & \\ 0 & \cdots & 1 & \cdots & 0 \\ \cdots & & & & \\ \sin\alpha_N & \cdots & 0 & \cdots & \cos\alpha_N \end{bmatrix} \cdots \begin{bmatrix} 1 & \cdots & 0 & & \cdots \\ \cdot & & & & \\ \cdot & & & & \\ \cdot & & & & \\ 0 & \cdots & \cos\alpha_N & -\sin\alpha_N \\ 0 & \cdots & \sin\alpha_N & \cos\alpha_N \end{bmatrix}$$

dispositif comportant :

-   un accès pour recevoir des échantillons x(n+1) (10),
-   un accès pour recevoir des échantillons de référence y (n+i) (11),
-   un accès où apparait une erreur e(n+1) (12),
-   des moyens pour traiter des échantillons de référence y(n+1) (20),
-   des moyens (21) pour évaluer ladite erreur e(n+1) entre chaque des échantillons x(n+1) et y(n+1) en coopération avec des moyens (20) pour traiter l'échantillon de référence,
-   des moyens (20) pour évaluer par récurrence :

    a)

$$\begin{bmatrix} e_q(n+1) \\ X_q(n+1) \end{bmatrix} = Q_a(n) \begin{bmatrix} x(n+1) \\ W^{1/2}X_q(n) \end{bmatrix}$$

où

$e_q(n+1)$ est la transformée de l'erreur $e(n+1)$ qui est un indicateur de son importance,
$X_q(n+1)$ est un vecteur à N composantes $x_{q;i}$ (i = 1, ..., N)
W est un facteur d'oubli tel que $0 \ll W < 1$

b) la matrice $Q_\alpha$ en calculant:

$$\sin\alpha_i = \frac{x_{q;i}}{\sqrt{x_{q;i}^2 + \sum_{k=1}^{i-1} x_{q;k}^2 + E_a(n+1)}}$$

c) $E_a(n+1) = WE_a(n) + e_q^2(n+1)$
d) $\alpha_2 = \gamma_N(n)e_q(n+1)/E_a^{1/2}(n+1)$
e) un vecteur "gain" $G_N(n+1)$ formé de N composantes $g_1$, ..., $g_N(n+1)$ :

$$\begin{bmatrix} \alpha_1 \\ G_N(n+1) \end{bmatrix} = Q_\alpha(n+1) \begin{bmatrix} G_N(n) \\ \alpha_2 \end{bmatrix}$$

f) la réactualisation de la matrice $Q_a(n)$ soit $Q_a(n+1)$ en calculant :

$$\begin{cases} \sin\theta_i &= g_{N-i}(n+1)/\gamma_i(n+1) \\ \gamma_{i+1} &= \gamma_i \cos\theta_i \end{cases}$$

caractérisé en ce qu'il comporte, en outre, des moyens (20) pour évaluer des échantillons filtrés $\tilde{y}$ (n+1) par récurrence en calculant :

$$\begin{bmatrix} U_{N-1} \\ y'_{q;N}(n+1) \end{bmatrix} = \frac{1}{\cos\theta_N} \begin{bmatrix} 1 & \sin\theta_N \\ \sin\theta_N & 1 \end{bmatrix} \begin{bmatrix} 0 \\ W^{1/2}y_{q;N}(n) \end{bmatrix}$$

$$
\begin{bmatrix} U_{i-1} \\ y'_{q;i}(n+1) \end{bmatrix} = \frac{1}{\cos\theta_i} \begin{bmatrix} 1 & \sin\theta_i \\ \sin\theta_i & 1 \end{bmatrix} \begin{bmatrix} U_i \\ W^{1/2}y_{q;i}(n) \end{bmatrix}
$$

$$
\begin{bmatrix} \tilde{y}(n+1) \\ y'_{q;1}(n+1) \end{bmatrix} = \frac{1}{\cos\theta_1} \begin{bmatrix} 1 & \sin\theta_1 \\ \sin\theta_1 & 1 \end{bmatrix} \begin{bmatrix} U_1 \\ W^{1/2}y_{q;1}(n) \end{bmatrix}
$$

et évaluer :

$$
e_q(n+1) = \gamma_N(n+1)\, e(n+1)
$$

$$
Y_q(n+1) = [Y'_q(n+1) + e(n+1).G(n+1)]
$$

et un accès (28) où apparait ledit signal $\tilde{y}(n+1)$.

2. Dispositif de filtrage selon la revendication 1, caractérisé en ce qu'il comporte une table pour fournir le sinus/cosinus d'un angle en fonction de son cosinus/sinus.

3. Dispositif de filtrage selon la revendication 2, caractérisé en ce que pour effectuer cette normalisation il comporte une table pour fournir un sin/cos d'un angle en fonction de sa tg/cotg.


**Patentansprüche**

1. Filteranordnung zur Durchführung eines am geringsten quadratischen Verfahrens unter Verwendung einer ersten Rotationsmatrize $Q_a$, die sich von einer Matrize $Q_N(n+1)$ ableitet:

$$
\hat{Q}_N(n+1) = \begin{bmatrix} \cos\theta_N & \ldots & -\sin\theta_N & \ldots & 0 \\ \vdots & \vdots & \vdots & \vdots & \vdots \\ \sin\theta_N & \ldots & \cos\theta_N & \ldots & 0 \\ \vdots & \vdots & \vdots & \vdots & \vdots \\ 0 & \ldots & 0 & \ldots & 1 \end{bmatrix} \ldots \begin{bmatrix} \cos\theta_1 & \ldots & 0 & \ldots & -\sin\theta_1 \\ \vdots & \vdots & \vdots & \vdots & \vdots \\ 0 & \ldots & 1 & \ldots & 0 \\ \vdots & \vdots & \vdots & \vdots & \vdots \\ \sin\theta_1 & \ldots & 0 & \ldots & \cos\theta_1 \end{bmatrix} \ldots
$$

wobei diese Matrize der Definition einer Matrize $Q_N(n+1)$ dient:

$$
Q_N(n+1) = \hat{Q}_N(n+1) \begin{bmatrix} 1 & 0 \\ 0 & Q_N(n) \end{bmatrix}
$$

wobei die Matrize $Q_a$, von dieser letzteren Matrize durch Entfernen der Zeilen abgeleitet wird, die nur Nullen und Einser haben,
und einer zweiten Matrize $Q_\alpha(n+1)$:

$$Q_\alpha(n+1) = \begin{bmatrix} \cos\alpha_N & \dots & 0 & \dots & -\sin\alpha_N \\ & \dots & & & \\ 0 & \dots & 1 & \dots & 0 \\ \sin\alpha_N & \dots & 0 & \dots & \cos\alpha_N \end{bmatrix} \dots$$

$$\begin{bmatrix} 1 & \dots & 0 & & \dots \\ \vdots & & & & \\ \dots & 0 & \dots & \cos\alpha_N & -\sin\alpha_N \\ \dots & 0 & \dots & \sin\alpha_N & \cos\alpha_N \end{bmatrix}$$

und die Anordnung enthält:

- einen Zugang für den Erhalt von Mustern x(n+1) (10),
- einen Zugang für den Erhalt der Referenzmuster Y (h+i) (11),
- einen Zugang, an dem ein Fehler e(4+1) auftritt (12),
- Mittel zur Verarbeitung der Referenzmuster y(n+1) (20),
- Mittel (21) zur Bewertung des besagten Fehlers e(n+1) zwischen jedem Muster x(n+1) und y(n+1) in Zusammenarbeit mit den Mitteln (20) zur Verarbeitung des Referenzmusters,
- Mittel (20) zur Rekursionsbewertung:

a)

$$\begin{bmatrix} e_q(n+1) \\ X_q(n+1) \end{bmatrix} = Q_a(n) \begin{bmatrix} x(n+1) \\ W^{1/2}X_q(n) \end{bmatrix}$$

wobei $e_q(n+1)$ die Transformierte des Fehlers e(n+1) ist, die ein Indikator ihrer Bedeutung ist,
$X_q(n+1)$ ein Vektor mit N Komponenten $x_{q;i}$ (i = 1, ..., N) ist,
W ein Unterlassungsfaktor ist wie 0 << W < 1

b) die Matrize $Q_\alpha$, unter Berechnung:

$$\sin\alpha_i = \frac{x_{q;i}}{\sqrt{x_{q;i}^2 + \sum_{k=1}^{i-1} x_{q;k}^2 + E_a(n+1)}}$$

c) $E_a(n+1) = WE_a(n) + e_q^2(n+1)$
d) $\alpha_2 = \gamma_N(n)e_q(n+1)/E_a^{1/2}(n+1)$
e) einen "Leistungsvektor" $G_N(n+1)$, gebildet aus N Komponenten $g_1,..., g_N(n+1)$:

$$\begin{bmatrix} \alpha_1 \\ G_N(n+1) \end{bmatrix} = Q_\alpha(n+1) \begin{bmatrix} G_N(n) \\ \alpha_2 \end{bmatrix}$$

f) die Reaktualisierung der Matrize $Q_a(n)$ sprich $Q_a(n+1)$, unter Berechnung:

$$\begin{cases} \sin\theta_i & = & g_{N-i}(n+1)/\gamma_i(n+1) \\ \gamma_{i+1} & = & \gamma_i\cos\theta_i \end{cases}$$

dadurch gekennzeichnet, daß sie außerdem Mittel (20) zur Bewertung der rekursionsgefilterten Muster $\tilde{y}(n+1)$ enthält, unter Berechnung:

$$\begin{bmatrix} U_{N-1} \\ y_{q':N}(n+1) \end{bmatrix} = \frac{1}{\cos\theta_N} \begin{bmatrix} 1 & \sin\theta_N \\ \sin\theta_N & 1 \end{bmatrix} \begin{bmatrix} 0 \\ W^{1/2}\, y_{q:N}(n) \end{bmatrix}$$

$$\begin{bmatrix} U_{i-1} \\ y_{q':i}(n+1) \end{bmatrix} = \frac{1}{\cos\theta_i} \begin{bmatrix} 1 & \sin\theta_i \\ \sin\theta_i & 1 \end{bmatrix} \begin{bmatrix} U_i \\ W^{1/2}\, y_{q:i}(n) \end{bmatrix}$$

$$\begin{bmatrix} \tilde{y}(n+1) \\ y_{q':1}(n+1) \end{bmatrix} = \frac{1}{\cos\theta_1} \begin{bmatrix} 1 & \sin\theta_1 \\ \sin\theta_1 & 1 \end{bmatrix} \begin{bmatrix} U_1 \\ W^{1/2}\, y_{q:1}(n) \end{bmatrix}$$

und Bewertung:

$$e_q(n+1) = \gamma_N(n+1)\, e(n+1)$$

$$Y_q(n+1) = \left[ Y'_q(n+1) + e(n+1)\cdot G(n+1) \right]$$

und einen Zugang (28), an dem das besagte Fehlersignal $\tilde{y}(n+1)$ auftritt.

2. Filteranordnung nach Anspruch 1, dadurch gekennzeichnet, daß sie eine Tabelle enthält, um den Sinus/Kosinus eines Winkels unter Berücksichtigung seines Kosinus/Sinus zu liefern.

3. Filteranordnung nach Anspruch 2, dadurch gekennzeichnet, daß sie zum Durchführung dieser Normalisierung Tabelle enthält, um den sin/cos eines Winkels unter Berücksichtigung seiner tan/cot zu liefern.

**Claims**

1. A filter device implementing a least squares method, implying a first rotation matrix $Q_a$ which is derived from a matrix $Q_N(n + 1)$:

$$\hat{Q}_N(n+1) = \begin{bmatrix} \cos\theta_N & \ldots & -\sin\theta_N & \ldots & 0 \\ \vdots & \vdots & \vdots & \vdots & \vdots \\ \sin\theta_N & \ldots & \cos\theta_N & \ldots & 0 \\ \vdots & \vdots & \vdots & \vdots & \vdots \\ 0 & \ldots & 0 & \ldots & 1 \end{bmatrix} \ldots \begin{bmatrix} \cos\theta_1 & \ldots & 0 & \ldots & -\sin\theta_1 \\ \vdots & \vdots & \vdots & \vdots & \vdots \\ 0 & \ldots & 1 & \ldots & 0 \\ \vdots & \vdots & \vdots & \vdots & \vdots \\ \sin\theta_1 & \ldots & 0 & \ldots & \cos\theta_1 \end{bmatrix}$$

which matrix is used for defining a matrix $Q_N(n+1)$:

$$Q_N(n+1) = \hat{Q}_N(n+1) \begin{bmatrix} 1 & 0 \\ 0 & Q_N(n) \end{bmatrix}$$

where the matrix $Q_a$ is derived from the latter matrix by suppressing the rows that have only zeroes and ones, and a second matrix $Q_\alpha(n+1)$:

$$Q_\alpha(n+1) = \begin{bmatrix} \cos\alpha_N & \ldots & 0 & \ldots & -\sin\alpha_N \\ & \ldots & & & \\ 0 & \ldots & 1 & \ldots & 0 \\ \sin\alpha_N & \ldots & 0 & \ldots & \cos\alpha_N \end{bmatrix} \ldots$$

$$\begin{bmatrix} 1 & \ldots & 0 & & \ldots & \\ \vdots & & & & & \\ \ldots & 0 & \ldots & \cos\alpha_N & -\sin\alpha_N \\ \ldots & 0 & \ldots & \sin\alpha_N & \cos\alpha_N \end{bmatrix}$$

which device comprises:

- an access (10) for receiving samples x(n+1),
- an access (11) for receiving reference samples y(n+1),
- an access (12) where an error signal e(n+1) appears,
- processor means (20) for processing reference samples y(n+1),
- evaluation means (21) for evaluating said error e(n+1) between each of the samples x(n+1) and y(n+1) in cooperation with processor means (20) for processing the reference sample,
- evaluation means (20) for recurrently evaluating:

   a)

$$\begin{bmatrix} e_q(n+1) \\ X_q(n+1) \end{bmatrix} = Q_a(n) \begin{bmatrix} x(n+1) \\ W^{1/2} X_q(n) \end{bmatrix}$$

where

$e_q(n+1)$ is the transform of the error $e(n+1)$ which is an indicator of its importance,
$X_q(n+1)$ is a vector of N components $x_{q;i}$ (i=1, ..., N)
W is an omission factor, so that $0 << W < 1$

b) the matrix $Q_\alpha$ by calculating:

$$\sin \alpha_i = \frac{x_{q;i}}{\sqrt{x_{q;i}^2 + \sum_{k=1}^{i-1} x_{q;k}^2 + E_a(n+1)}}$$

c) $E_a(n+1) = WE_a(n) + e_q^2(n+1)$
d) $\alpha_2 = \gamma_N(n)e_q(n+1)/E_a^{1/2}(n+1)$
e) a gain vector $G_N(n+1)$ formed by N components $g_1, ..., g_N(n+1)$:

$$\begin{bmatrix} \alpha_1 \\ G_N(n+1) \end{bmatrix} = Q_\alpha(n+1) \begin{bmatrix} G_N(n) \\ \alpha_2 \end{bmatrix}$$

f) the updating of the matrix $Q_a(n)$ is $Q_a(n+1)$ by calculating:

$$\begin{cases} \sin \theta_i & = & g_{N-i}(n+1)/\gamma_i(n+1) \\ \gamma_{i+1} & = & \gamma_i \cos \theta_i \end{cases}$$

characterized in that it further comprises evaluation means (20) for evaluating recurring filtered samples $\tilde{y}(n+1)1$ by calculating:

$$\begin{bmatrix} U_{N-1} \\ y'_{q;N}(n+1) \end{bmatrix} = \frac{1}{\cos \theta_N} \begin{bmatrix} 1 & \sin \theta_N \\ \sin \theta_N & 1 \end{bmatrix} \begin{bmatrix} O \\ W^{1/2} y_{q;1}(n) \end{bmatrix}$$

$$\begin{bmatrix} U_{i-1} \\ y'_{q;i}(n+1) \end{bmatrix} = \frac{1}{\cos \theta_i} \begin{bmatrix} 1 & \sin \theta_i \\ \sin \theta_i & 1 \end{bmatrix} \begin{bmatrix} U_i \\ W^{1/2} y_{q;i}(n) \end{bmatrix}$$

$$\begin{bmatrix} \tilde{y}(n+1) \\ y'_{q:1}(n+1) \end{bmatrix} = \frac{1}{\cos \theta_1} \begin{bmatrix} 1 & \sin \theta_1 \\ \sin \theta_1 & 1 \end{bmatrix} \begin{bmatrix} U_1 \\ W^{1/2} y_{q:1}(n) \end{bmatrix}$$

and evaluating

$$e_q(n+1) = \gamma_N(n+1)e(n+1)$$

$$Y_q(n+1) = \left[ Y'_q(n+1) + e(n+1) \cdot G(n+1) \right]$$

and an access (28) where said signal $\tilde{y}(n+1)$ appears.

2. A filter device as claimed in claim 1, characterized in that it includes a table for producing the sine/cosine of an angle as a function of its cosine/sine.

3. A filter device as claimed in claim 2, characterized in that for effecting this normalization it includes a table for producing a sine/cosine of an angle as a function of its tg/cotg.

FIG.1

FIG.2

FIG.3

FIG. 4

FIG. 5

$x(n+1)$ — K106

$y(n+1)$ — K108

$$tg\,\psi = \frac{x(n+1)}{E}$$ — K210

K211 — $Sin\ \psi$ — $\}$K230

K231 — $Cos\ \psi$ — $\}$K160 (FIG.4)

$es = Sin\ \psi$ — K42

$i = 1, \cdots, N$
$$\begin{bmatrix} e\,q \\ X\,q(i) \end{bmatrix} = Q(i) \begin{bmatrix} es \\ Xq(i) \end{bmatrix}$$ — K250

$e'_q = 1$ — K252

$i = 1, \cdots, N$ — K254
$Sin\ \alpha(i) = Xaq(i)/e'_q$

$Cos\ \alpha(i)$ — K256 — $\}$K160 (FIG.4)

$e'_q = e'_q\ Cos\ \alpha(i)$ — K258

$\alpha_2 = \gamma : (e_q/e'_q)$ — K260
$EN = G(N) . Sin\alpha(N) - \alpha_2 . Cos\ \alpha(N)$

K164 (FIG.5)

K230 — tg / Sin

## FIG. 6

21

FIG.7

FIG.8